# EUROPEAN PATENT APPLICATION

(11) **EP 4 765 420 A1**
(43) Date of publication of application: **24.06.2026**
(21) Application number: 25774894.7
(22) Date of filing: 07.03.2025
(51) Int. Cl.: H01M 50/367, H01M 50/289, H01M 50/317, H01M 50/249, B60L 50/64

(54) **BATTERY PACK AND VEHICLE INCLUDING SAME**

(30) Priority: 21.03.2024 KR 20240039141
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2025/003063
(87) International publication number: WO 2025/198232

(57) **Abstract**

Disclosed is a battery pack, which includes a plurality of battery modules; a pack case having an outer wall and a plurality of cross beams that partition an inner space surrounded by the outer wall, the pack case being configured such that the plurality of battery modules are respectively arranged in the partitioned spaces; and a gas movement channel provided inside the cross beams and the outer wall, wherein the battery pack is configured such that, when gas is generated in any one of the battery modules, the gas is discharged to the outside of the pack case through the gas movement channel of the outer wall and the cross beam adjacent to the battery module in which the gas is generated.

## Description

### TECHNICAL FIELD

The present disclosure relates to a battery pack, and more specifically, to a battery pack capable of suppressing thermal runaway of battery modules by eliminating heat energy accumulation inside the battery pack when a thermal event occurs.

The present application claims priority to Korean Patent Application No. 10-2024-0039141 filed on March 21, 2024 in the Republic of Korea, the disclosures of which are incorporated herein by reference.

### BACKGROUND ART

Secondary batteries are attracting attention as a new energy source for environmental friendliness and energy efficiency, not only because they have the primary advantage of drastically reducing the use of fossil fuels, but also because they do not produce any by-products from energy use.

Accordingly, the application of secondary batteries to various devices is increasing. For example, secondary batteries are not only widely used as energy sources for multifunctional small products such as wireless mobile devices or wearable devices, but are also used as energy sources or energy storage systems (ESS) for electric vehicles and hybrid electric vehicles that are presented as alternatives to existing gasoline and diesel vehicles.

In general, the operating voltage of a secondary battery is approximately 2.5 V to 4.5 V. Therefore, for electric vehicles or power storage systems that require large capacity and high output, a battery module in which a number of secondary batteries are connected in series and/or in parallel, and a battery pack in which the battery modules are connected in series and/or in parallel are configured and used as an energy source.

Recently, battery packs are designed to accommodate as many secondary batteries and battery modules as possible in order to increase energy density. Therefore, if one of the secondary batteries or battery modules ignites, it may easily cause a chain reaction of fires to other secondary batteries or battery modules. Therefore, how to ensure the safety of battery packs is emerging as an important issue.

Meanwhile, a conventional battery pack includes, for example, a pack structure such as a cross beam between battery modules to secure the structural rigidity of the pack case. The cross beam also plays a role in preventing heat transfer between battery modules in a situation where a thermal event occurs inside the battery pack. However, if the ignition of the battery module continues, high-temperature gas is emitted from the battery module. As the high-temperature gas accumulates inside the battery pack, other battery modules in the vicinity may suffer thermal damage, and further, the internal pressure of the battery pack may increase, causing the pack case to collapse. Therefore, when a thermal event occurs, it is necessary to appropriately discharge high-temperature gas, etc. to the outside of the battery pack in order to suppress the accumulation of heat energy and pressure increase inside the battery pack.

### DISCLOSURE

### Technical Problem

The present disclosure is designed to solve the problems of the related art, and therefore the present disclosure is directed to providing a battery pack, which may suppress thermal runaway of battery modules and prevent collapse of a pack case by relieving heat energy accumulation inside the battery pack when a thermal event occurs.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack comprising: a plurality of battery modules; a pack case having an outer wall and a plurality of cross beams that partition an inner space surrounded by the outer wall, the pack case being configured such that the plurality of battery modules are respectively arranged in the partitioned spaces; and a gas movement channel provided inside the cross beams and the outer wall, wherein the battery pack is configured such that, when gas is generated in any one of the battery modules, the gas is discharged to the outside of the pack case through the gas movement channel of the outer wall and the cross beam adjacent to the battery module in which the gas is generated.

The gas movement channel may include a main channel extending along the outer wall; and a plurality of branch channels branching from the main channel and extending along each of the cross beams.

The cross beam may include a gas suction port provided in at least one side surface and communicating the partitioned space with the branch channel; and an opening/closing member configured to cover the gas suction port and operate to open the gas suction port when gas pressure is applied.

The cross beam may include a barrier provided therein and extending along the branch channel, and the branch channel may include a first branch channel and a second branch channel separated from each other by the barrier.

At least one gas suction port may be provided in both side surfaces of the cross beam.

The gas suction port provided in one side surface of the cross beam and the gas suction port provided in the other side surface of the cross beam may be arranged so as not to face each other.

The opening/closing member may include an opening/closing plate provided in the form of a plate with a larger area than the gas suction port and having only one end fixedly connected to an inside of the cross beam.

The opening/closing plate may be made of a material having a property of bending by an external force, and the cross beam may include a barrier provided therein and extending along the branch channel; and a plate stopper protrudingly formed on the barrier to limit bending of the opening/closing plate.

The plate stopper may include a first blocking plate extending in a direction intersecting the barrier; and a second blocking plate intersecting the first blocking plate and extending in a direction toward the main channel.

The opening/closing member may include an opening/closing plate provided in the form of a plate capable of covering the gas suction port; and a damper hinge connected to one end of the opening/closing plate and fixedly connected to an inside of the cross beam.

The opening/closing member may include an opening/closing plate provided in the form of a plate with a larger area than the gas suction port; and an elastic member provided inside the cross beam and configured to elastically pressurize the opening/closing plate to cover the gas suction port.

The cross beam may include a barrier provided therein and extending along the branch channel, and
the elastic member may have one end coupled to the opening/closing plate and the other end coupled to the barrier.

The outer wall may include at least one gas discharge port through which gas is discharged from the gas movement channel to the outside of the pack case.

The pack case may include a pack tray provided in the form of a box with an open top and having the partitioned spaces therein, and a pack cover configured to cover the open top of the pack tray and coupled to the pack tray.

In another aspect of the present disclosure, there is provided a vehicle including the battery pack described above.

### Advantageous Effects

According to the present disclosure, it is possible to provide a battery pack, which may suppress thermal runaway of battery modules and prevent collapse of a pack case by relieving heat energy accumulation inside the battery pack when a thermal event occurs.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a perspective view schematically showing a battery pack according to an embodiment of the present disclosure.
FIG. 2 is a partially exploded perspective view showing the battery pack of FIG. 1.
FIG. 3 is a schematic perspective view showing a pack tray according to an embodiment of the present disclosure.
FIG. 4 is a cross-sectional view schematically showing the pack tray according to an embodiment of the present disclosure.
FIG. 5 is a partial cross-sectional view showing the pack tray according to an embodiment of the present disclosure.
FIG. 6 is a diagram showing a cross beam when a gas suction port is open as a part of the pack tray according to this embodiment.
FIG. 7 is a partial cross-sectional view showing an outer wall and a cross beam according to an embodiment of the present disclosure.
FIG. 8 is a drawing showing a gas discharge path when one of the battery modules of the battery pack according to an embodiment of the present disclosure ignites.
FIG. 9 is a drawing corresponding to FIG. 7, showing a first modified example of the cross beam of FIG. 7.
FIG. 10 is a drawing corresponding to FIG. 7, showing a second modified example of the cross beam of FIG. 7.
FIG. 11 is a drawing corresponding to FIG. 7, showing a third modified example of the cross beam of FIG. 7.
FIG. 12 is a drawing corresponding to FIG. 7, showing a fourth modified example of the cross beam of FIG. 7.
FIG. 13 is a schematic view showing a vehicle including the battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, when explaining the present disclosure, if it is judged that a detailed description of the relevant notice structure or function may obscure the main point of the present disclosure, such detailed description will be omitted.

Since the embodiments of the present disclosure are provided to more completely explain the present disclosure to those skilled in the art, the shapes and sizes of components in the drawings may be exaggerated, omitted, or schematically illustrated for clearer explanation. Accordingly, the size or ratio of each component does not entirely reflect the actual size or ratio.

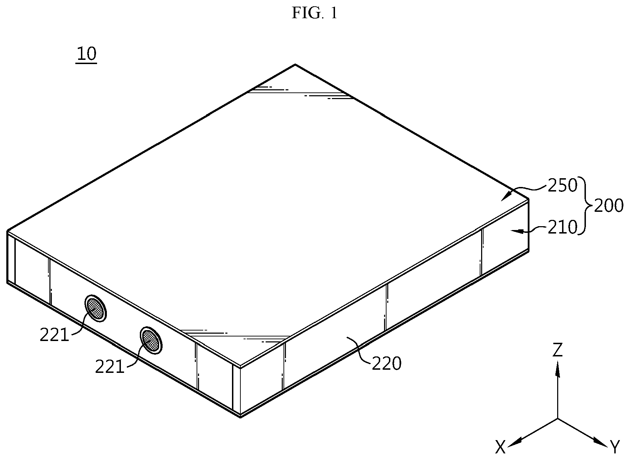

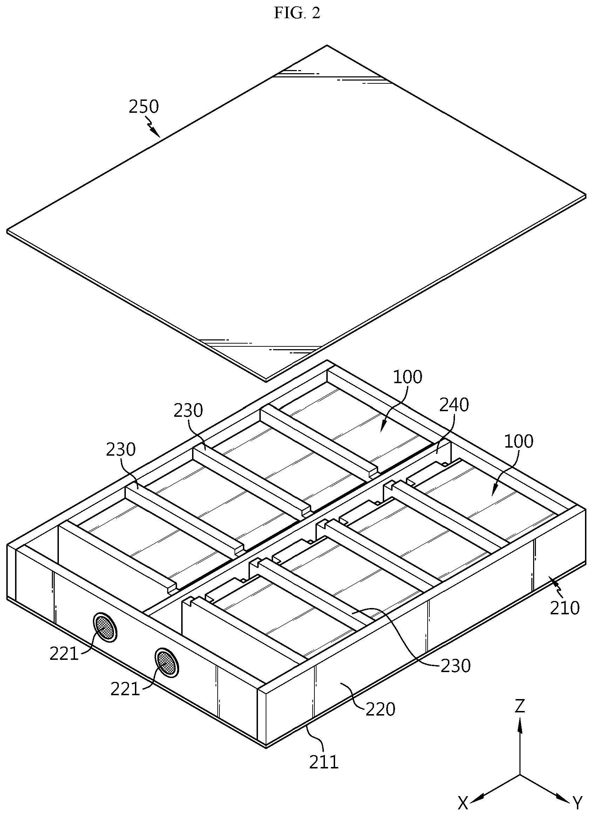

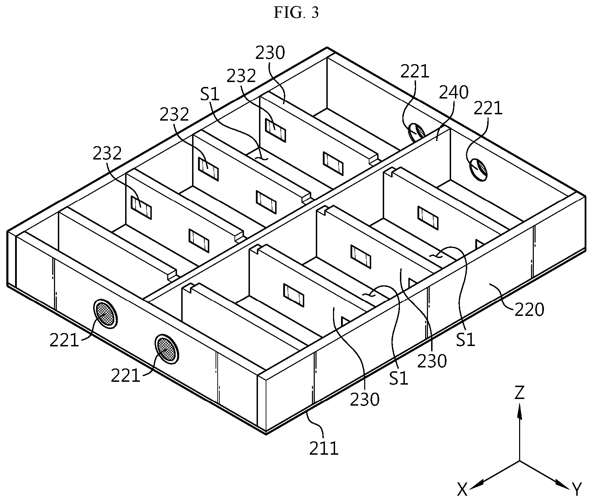

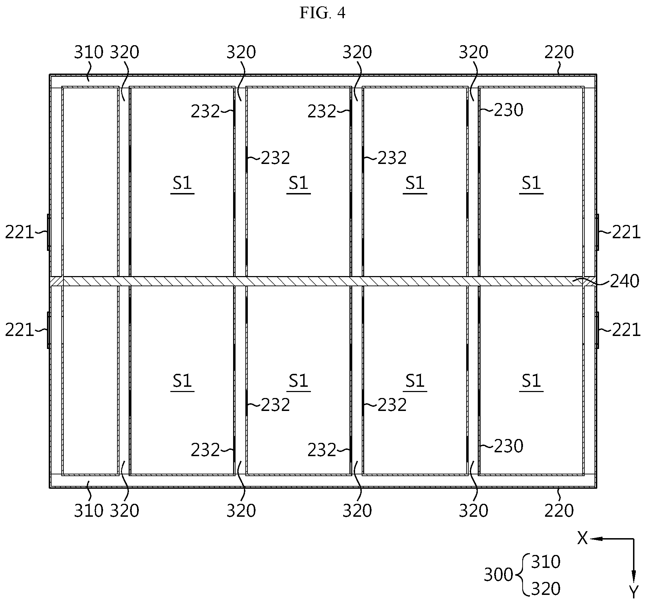

FIG. 1 is a perspective view schematically showing a battery pack according to an embodiment of the present disclosure, FIG. 2 is a partially exploded perspective view showing the battery pack of FIG. 1, FIG. 3 is a schematic perspective view showing a pack tray according to an embodiment of the present disclosure, and FIG. 4 is a cross-sectional view schematically showing the pack tray according to an embodiment of the present disclosure.

Referring to the above drawings, a battery pack 10 according to an embodiment of the present disclosure may include a plurality of battery modules 100, a pack case 200, and a gas movement channel 300.

The battery module 100 may include a plurality of battery cells and a module case accommodating the battery cells. Here, the battery cell means a secondary battery including an electrode assembly, an electrolyte, and a battery case, and has no limitation on the form of a secondary battery such as a pouch-shaped, cylindrical, or rectangular secondary battery. In addition, the module case may be configured to accommodate the battery cells and have a gas venting hole (not shown) in at least one side. In the battery module 100, when an internal fire occurs, gas or flame may be discharged out of the module case through the gas venting hole. The module case may be made of a metal material such as steel or a non-metallic material with high rigidity so as to protect the battery cells from external impact, etc.

The battery modules 100 may be respectively mounted in the space S1 partitioned by a cross beam 230 and a center beam 240 in the pack tray 210 of the pack case 200, and may be electrically connected to each other using an inter-bus bar (not shown) or a cable.

The pack case 200 may be configured to accommodate a plurality of battery modules 100. The pack case 200 may include a pack tray 210 and a pack cover 250, as shown in FIGS. 2 and 3. The pack tray 210 may have partitioned spaces S1 therein, and battery modules 100 may be respectively arranged in the partitioned spaces S1, and may be configured in a box shape with an open top. The pack cover 250 may cover the open top of the pack tray 210 and may be configured to be connectable with the pack tray 210.

Specifically, the pack tray 210 may include, as shown in FIG. 3, a base plate 211 that supports the battery modules 100 at the bottom of the battery modules 100, an outer wall 220 that forms a wall along an outer edge of the base plate 211, and a plurality of cross beams 230 and a center beam 240 that define an inner space surrounded by the outer wall 220.

The pack tray 210 according to this embodiment includes a center beam 240, which is a wall extending in a vertical direction (X direction) and dividing the inner space of the pack tray 210 into two parts, and cross beams 230, which extend in a horizontal direction (Y direction) and have both ends connected to the center beam 240 and the outer wall 220. That is, one end of the cross beam 230 may be connected to the center beam 240, and the other end of the cross beam 230 may be connected to the outer wall 220. In addition, the cross beams 230 may be arranged to be spaced apart from each other.

The cross beam 230 and the center beam 240 support the outer wall 220 and increase the structural rigidity of the pack tray 210. Accordingly, the pack tray 210 may substantially not suffer from deformation, such as twisting, even by an external impact.

In addition, the pack tray 210 has a plurality of partitioned spaces S1 so that the battery modules 100 may be accommodated in a partitioned manner. When the battery modules 100 are accommodated in a partitioned manner, for example, in a situation where a thermal event occurs in any battery module 100, the cross beam 230 or the center beam 240 may block heat and high-temperature gas, thereby blocking or delaying heat transmission between the battery modules 100.

The pack tray 210 may include a gas discharge port 221. The gas discharge port 221 may be provided in at least one side of the outer wall 220.

The gas discharge port 221 may be formed by penetrating the outer wall 220. A metal mesh net may be coupled with the gas discharge port 221. The gas may pass through the metal mesh net, but flames or sparks may be prevented from leaking to the outside by the metal mesh net. Although not shown, a valve unit that opens and closes according to the internal and external pressure difference of the pack case 200 may be mounted to the gas discharge port 221.

For example, as shown in FIG. 3, in this embodiment, two gas discharge ports 221 may be provided in each of the front (+X direction) and rear (-X direction) sides of the outer wall 220. One of the two gas discharge ports 221 provided at the front of the outer wall 220 may be provided at the left side of the center beam 240, and the other may be provided at the right side of the center beam 240. The two gas discharge ports 221 provided at the rear of the outer wall 220 may also be provided at each of the left and right sides of the center beam 240. Here, the gas discharge ports 221 located at the left side of the center beam 240 are used to discharge gas that may be generated in the battery modules 100 arranged at the left side of the center beam 240 to the outside of the pack case 200, and the gas discharge ports 221 located at the right side of the center beam 240 are used to discharge gas that may be generated in the battery modules 100 arranged at the right side of the center beam 240 to the outside of the pack case 200.

The pack cover 250 may be provided in the form of a plate that is bolted to, for example, the upper end of the outer wall 220 of the pack tray 210 and may cover at least the open top of the pack tray 210. Although not shown, a sealing gasket may be arranged on the upper end of the outer wall 220, and a rim of the pack cover 250 may be placed on the sealing gasket.

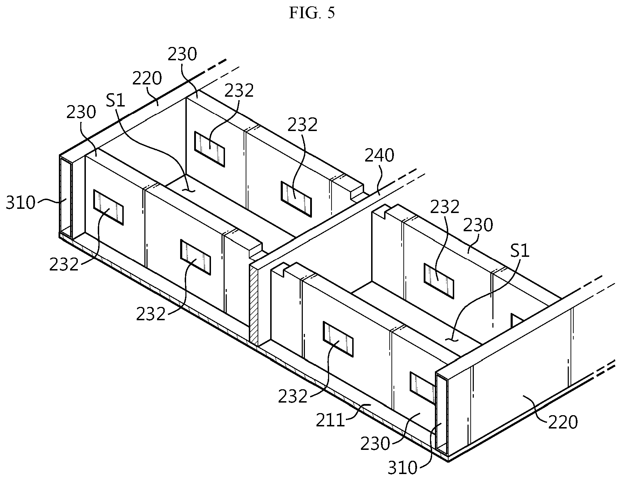

Referring to FIGS. 4 and 5, the gas movement channel 300 may be provided inside the cross beams 230 and the outer wall 220. For example, the cross beams 230 and the outer wall 220 may be provided as a hollow structure so that fluid may move therein.

As will be described in detail later, the battery pack 10 according to the present disclosure is configured such that, when gas is generated in any one battery module 100 among a plurality of battery modules 100, the gas moves along the gas movement channel 300 provided inside the cross beam 230 and the outer wall 220 adjacent to the any one battery module 100 and is discharged to the outside of the pack case 200 through the gas discharge port 221. According to this configuration of the present disclosure, the high-temperature gas may be discharged to the outside of the pack case 200 while minimizing thermal damage to other battery modules 100 in the vicinity, thereby resolving heat energy accumulation inside the battery pack 10 and preventing collapse of the pack case 200.

In this embodiment, the gas movement channel 300 may be separated into a left gas movement channel 300 and a right gas movement channel 300 with respect to the center beam 240, as shown in FIG. 4. The left gas movement channel 300 and the right gas movement channel 300 may be configured not to communicate with each other. The left gas movement channel 300 may be used as a passage for gas generated in the battery modules 100 arranged at the left (-Y direction) of the center beam 240, and the right gas movement channel 300 may be configured to be used as a passage for gas generated in the battery modules 100 arranged at the right (+Y direction) of the center beam 240. The gas moving along the left gas movement channel 300 may be discharged outside the pack case 200 through the left gas discharge port 221 described above, and the gas moving along the right gas movement channel 300 may be discharged outside the pack case 200 through the right gas discharge port 221 described above.

According to this configuration, it is possible to prevent high-temperature gas from continuously circulating inside the outer wall 220, and it is effective in suppressing heat energy transmission between the battery modules 100 at the left side and the battery modules 100 at the right side based on the center beam 240.

The gas movement channel 300 may include a main channel 310 extending along the outer wall 220 and a plurality of branch channels 320 branching from the main channel 310 and extending along each of the cross beams 230.

The main channel 310 is a gas movement passage provided inside the outer wall 220, and the branch channels 320 are gas movement passages provided inside the cross beams 230 and may be provided to communicate with the main channel 310.

For example, as shown in FIG. 4, the main channel 310 may be provided inside the outer wall 220 to communicate with the gas discharge ports 221 provided at the front (+X direction) and rear (-X direction) of the outer wall 220. The branch channels 320 may be provided inside each cross beam 230 by branching off from the main channel 310. When gas is generated in the battery module 100, the gas may flow into the cross beam 230 surrounding the partitioned space S1 of the pack tray 210 where the battery module 100 is placed, i.e., the branch channel 320, move from the branch channel 320 to the main channel 310, and be discharged to the outside of the pack case 200 through the gas discharge port 221. As the amount of gas increases inside the pack case 200, the pressure difference inside and outside the pack case 200 increases, so the gas may be quickly discharged along the gas movement channel 300 toward the gas discharge port 221.

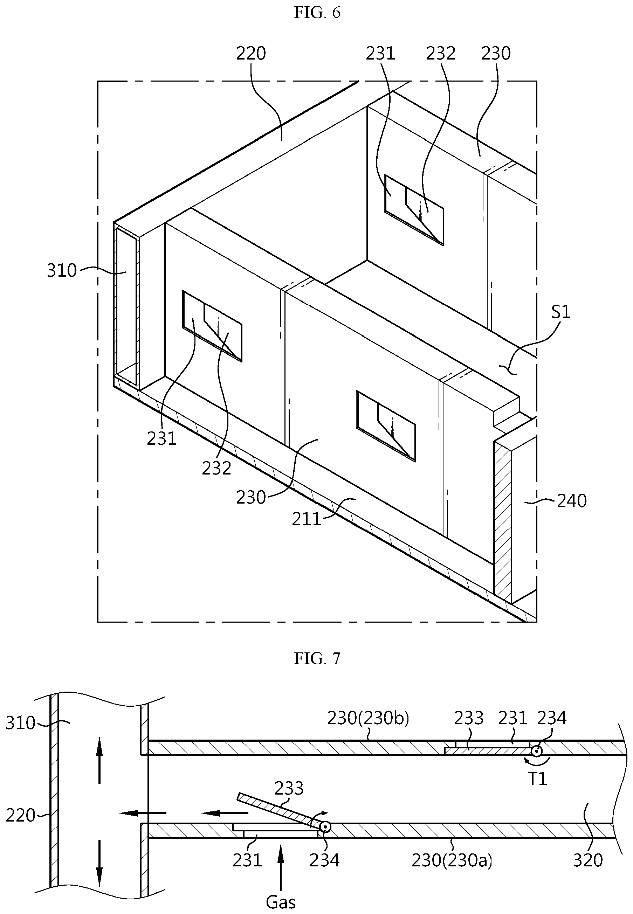

Referring to FIGS. 5 and 6, each cross beam 230 according to this embodiment may include a gas suction port 231 and an opening/closing member 232 that opens/closes the gas suction port 231.

The gas suction port 231 may be a hole perforated in one side surface of the cross beam 230 to allow the partitioned space S1, where the battery module 100 is disposed, to communicate with the branch channel 320.

The gas suction port 231 may be provided in at least one side surface of the cross beam 230. That is, the gas suction port 231 may be provided in only one side surface of the cross beam 230 or in both side surfaces. For example, depending on the arrangement of the cross beams 230 and the battery modules 100, the gas suction port 231 may be provided in both side surfaces of the cross beam 230 or in only one side surface of the cross beam 230. Meanwhile, the shape, number, and position of the gas suction ports 231 do not necessarily have to be the same as in this embodiment.

The opening/closing member 232 is configured to open and close the gas suction port 231, and may be configured to cover the gas suction port 231, but operate to open the gas suction port 231 when gas pressure is applied.

The opening/closing member 232 according to this embodiment may include an opening/closing plate 233 and a damper hinge 234. Referring to FIG. 7, the opening/closing plate 233 may be provided in the form of a plate capable of covering the gas suction port 231. Preferably, the opening/closing plate 233 may have a larger area than the gas suction port 231 and may be configured to be arranged inside the cross beam 230 relative to the gas suction port 231.

The opening/closing plate 233 may be configured to be coupled to the cross beam 230 with the damper hinge 234 to maintain a closed state in normal times and to be opened by gas pressure.

The damper hinge 234 may include a damper and two metal pieces, although not shown in detail. The damper may include a main body forming an appearance, a vane provided inside the main body, silicone oil, and a rotary shaft connected to the vane and extending inside and outside the main body, and configured such that a constant magnitude of torque is applied to the rotary shaft. In addition, the two metal pieces may be configured to be connected to the rotary shaft of the damper and rotate in a direction in which the torque is applied. One of the two metal pieces of the damper hinge 234 may be fixedly coupled to the opening/closing plate 233, and the other may be fixedly coupled to the cross beam 230. At this time, if the torque direction of the damper hinge 234 is set to a direction in which the opening/closing plate 233 closes, as indicated by 'T1' in FIG. 7, the gas suction port 231 may be shielded by the opening/closing plate 233 by the torque of the damper hinge 234 in normal times.

Meanwhile, when gas is generated in the battery module 100, the pressure of the gas acts to cause the opening/closing plate 233 to rotate as shown in FIG. 7, thereby opening the gas suction port 231. Then, the gas flows into the branch channel 320 through the gas suction port 231 and may move toward the main channel 310 and the gas discharge port 221 by the negative pressure difference.

If one side surface of the cross beam 230 is defined as a first side surface 230a and the other side surface is defined as a second side surface 230b, in this embodiment, one or more gas suction ports 231 and one or more opening/closing members 232 may be provided in the first side surface 230a and the second side surface 230b.

According to this configuration, for example, gas generated from any battery module 100 disposed in the partitioned space S1 facing the first side surface 230a of the cross beam 230 and gas generated from another battery module 100 disposed in the partitioned space S1 facing the second side surface 230b of the cross beam 230 may be introduced into the branch channel 320 provided inside the cross beam 230 located therebetween. In addition, the opening/closing plate 233 is structured to open only from the outside to the inside of the cross beam 230. Therefore, for example, if gas is generated only in any battery module 100 facing the first side surface 230a of the cross beam 230 and there is no problem in another battery module 100 facing the second side surface 230b of the cross beam 230, even if gas flows into the branch channel 320 through the gas suction port 231 of the first side surface 230a, the opening/closing plate 233 of the second side surface 230b is not opened by the gas. Therefore, the gas generated in the battery module 100 facing the first side surface 230a does not propagate through the cross beam 230 to another battery module 100 facing the second side surface 230b. At this time, the gas suction port 231 provided in the first side surface 230a of the cross beam 230 and the gas suction port 231 provided in the second side surface 230b of the cross beam 230 may be arranged so as not to face each other. In addition, it is preferable that the length of the opening/closing plate 233 is shorter than the width of the branch channel 320.

According to this configuration, when the opening/closing plate 233 provided on the first side surface 230a and the opening/closing plate 233 provided on the second side surface 230b rotate simultaneously, it is possible to prevent the opening/closing plates 233 from interfering with each other or blocking the flow path of the branch channel 320.

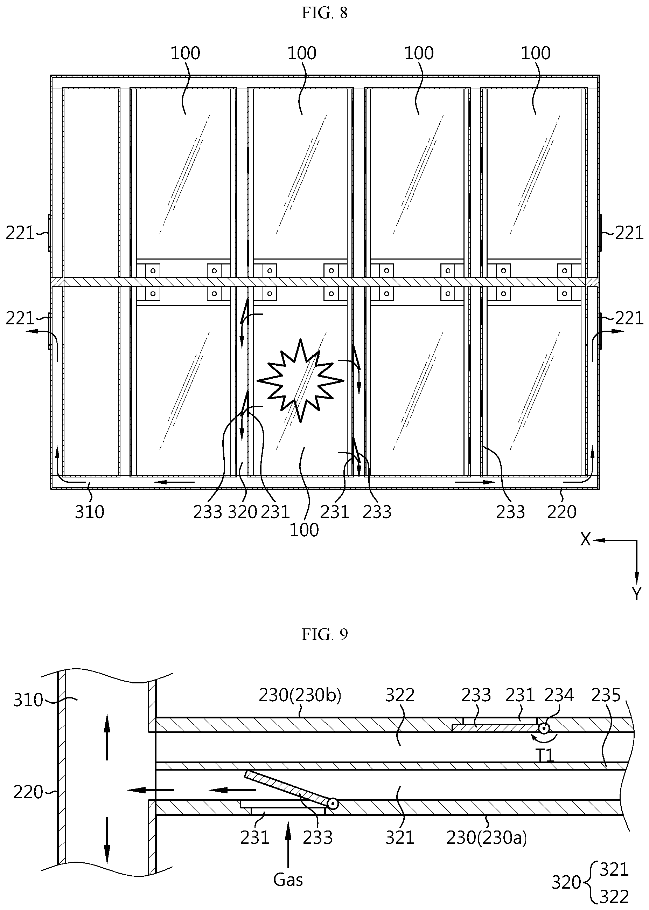

More specifically, as shown in FIG. 8, when there is a battery module 100 (hereinafter, referred to as a trigger battery module 100) in which a thermal event occurs among the plurality of battery modules 100, high-temperature gas is generated in the trigger battery module 100, so that the pressure of the partitioned space S1 where the trigger battery module 100 is placed increases. Then, as described above, the opening/closing plates 233 of the two cross beams 230 located in both side directions (+X direction) of the trigger battery module 100 rotate to open the gas suction ports 231, allowing gas to flow into the branch channels 320 provided inside the two cross beams 230. The gas introduced into the branch channels 320 may move along the main channel 310 provided inside the outer wall 220 of the pack tray 210 and may be discharged to the outside of the pack case 200 through the gas discharge port 221. In particular, according to this embodiment, when a thermal event occurs in the battery modules 100, gas generated in each battery module 100 is induced to flow along an individual and independent route, thereby minimizing heat transfer to other battery modules 100 in the vicinity and discharging the gas more quickly to the outside of the pack case 200, thereby effectively relieving pressure increase in the battery pack 10.

Next, modified examples of the former embodiment will be briefly described, respectively, with reference to FIGS. 9 to 13.

The same reference sign as in the former embodiment indicates the same component and will not be described in detail, and features different from the former embodiment will be explained in detail.

FIG. 9 is a drawing corresponding to FIG. 7, showing a first modified example of the cross beam of FIG. 7.

As shown in FIG. 9, the cross beam 230 according to the first modified example may include a barrier 235 extending along the branch channel 320 therein. Also, the branch channel 320 according to this modified example may include a first branch channel 321 and a second branch channel 322 separated from each other by the barrier 235.

According to the first modified example, the gas introduced through the first side surface 230a of the cross beam 230 is induced to flow along the first branch channel 321, and the gas introduced through the second side surface 230b of the cross beam 230 is induced to flow along the second branch channel 322. In this case, for example, when a high-temperature gas is introduced into the interior of the cross beam 230 and moves along the first branch channel 321, the second side surface 230b of the cross beam 230 does not directly contact the high-temperature gas. Therefore, the temperature of the second side surface 230b of the cross beam 230 does not rise significantly, and thus the battery module 100 adjacent to the second side surface 230b of the cross beam 230 may not be thermally damaged. In addition, since gas does not flow in the second branch channel 322, it is possible to prevent the gas suction port 231 from being unexpectedly opened due to damage such as thermal melting of the opening/closing plate 233 provided on the second side surface 230b of the cross beam 230. In addition, in the former embodiment, depending on the size or rotation angle of the opening/closing plate 233 provided on the first side surface 230a of the cross beam 230, the branch channel 320 may be unintentionally closed, causing the opening/closing plate 233 provided on the second side surface 230b of the cross beam 230 to open, thereby preventing the introduced gas from moving to the main channel 310. However, if the first branch channel 321 for the movement of gas introduced through the first side surface 230a of the cross beam 230 and the second branch channel 322 for the movement of gas introduced through the second side surface 230b of the cross beam 230 are independently provided as in the first modified example, the above situation does not occur.

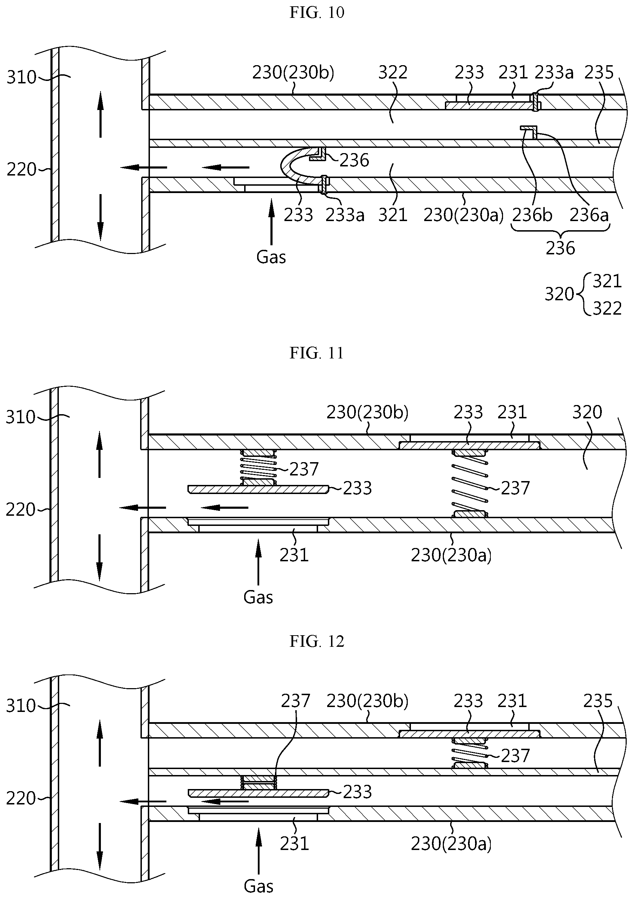

FIG. 10 is a drawing corresponding to FIG. 7, showing a second modified example of the cross beam of FIG. 7.

The cross beam 230 according to the second modified example of the present disclosure includes an opening/closing plate 233 provided in the form of a plate with a larger area than the gas suction port 231 and has only one end fixedly coupled to the inside of the cross beam 230. For example, the opening/closing plate 233 may be fixed to the cross beam 230 by a fixing member 233a such as a bolt or rivet, or may be fixed by a method such as adhesion or welding.

That is, in the second modified example, one end of the opening/closing plate 233 is a fixed end fixed to the cross beam 230, and the other end of the opening/closing plate 233 is a free end not restrained to the cross beam 230. The opening/closing plate 233 may be bent or broken by the pressure of the gas. The opening/closing plate 233 is preferably made of a material having a property of being bent by a predetermined external force, such as silicon, copper, aluminum, or wrought iron.

In addition, the cross beam 230 according to the second modified example may include a first branch channel 321 and a second branch channel 322 separated by the barrier 235, as in the first modified example described above.

Also, the cross beam 230 according to the second modified example may include a plate stopper 236 protrudingly formed on the barrier 235 to limit bending of the opening/closing plate 233. The plate stopper 236 may include a first blocking plate 236a extending in a direction intersecting the barrier 235 and a second blocking plate 236b intersecting the first blocking plate 236a and extending in a direction toward the main channel 310.

According to this second modified example, the gas suction port 231 may be normally shielded, and when gas is generated, the opening/closing plate 233 may be bent to open the gas suction port 231. In addition, the free end of the bent opening/closing plate 233 may be supported by the plate stopper 236 to restrict the bending of the opening/closing plate 233 and prevent the gas from flowing in a direction opposite to the main channel 310.

FIG. 11 is a drawing corresponding to FIG. 7, showing a third modified example of the cross beam of FIG. 7.

The opening/closing member 232 according to the third modified example of the present disclosure may include, as in FIG. 11, an opening/closing plate 233 provided in the form of a plate with a larger area than the gas suction port 231, and an elastic member 237 provided inside the cross beam 230 and elastically pressurizing the opening/closing plate 233 to cover the gas suction port 231.

A spring may be employed as the elastic member 237. The spring is an example of the elastic member 237. That is, in addition to the spring, any means capable of elastically pressurizing the opening/closing plate 233 may be employed as the elastic member 237.

The spring may have one end fixed to the side surface of the cross beam 230 facing the gas suction port 231 and the other end connected to the opening/closing plate 233, and the spring may be configured to elastically press the opening/closing plate 233 to close the gas suction port 231 when no external force is applied.

According to this third modified example, when gas pressure is applied in the direction toward the cross beam 230 in the partitioned space S1, the spring may be compressed and the opening/closing plate 233 may be detached from the gas suction port 231. In particular, according to the third modified example, since the opening/closing plate 233 translates according to the gas pressure and the deformation of the spring to open and close the gas suction port 231, there is no problem even if the sizes of the gas suction port 231 and the opening/closing plate 233 are formed larger than in the above modified examples. In particular, when the width of the cross beam 230 is not sufficient, the opening/closing member 232 that rotates to open and close the gas suction port 231 is restricted by the size of the opening/closing plate 233, but according to the third modified example, this restriction may be resolved.

FIG. 12 is a drawing corresponding to FIG. 7, showing a fourth modified example of the cross beam of FIG. 7.

The cross beam 230 according to the fourth modified example of the present disclosure includes a barrier 235 extending along the branch channel 320, and the opening/closing member 232 is substantially the same as the third modified example described above.

As in FIG. 12, in the fourth modified example, the elastic member 237 may be configured to have one end coupled to the opening/closing plate 233 and the other end coupled to the barrier 235.

According to the fourth modified example, the first branch channel 321 for the movement of gas introduced through the first side surface 230a of the cross beam 230 according to the first modified example and the second branch channel 322 for the movement of gas introduced through the second side surface 230b of the cross beam 230 are independently provided, thereby having the effect of blocking heat energy transmission between adjacent battery modules 100. In addition, as described in the third modified example, there is an advantage of high freedom of application of the opening/closing plate 233 and the gas suction port 231 in terms of the width of the cross beam 230.

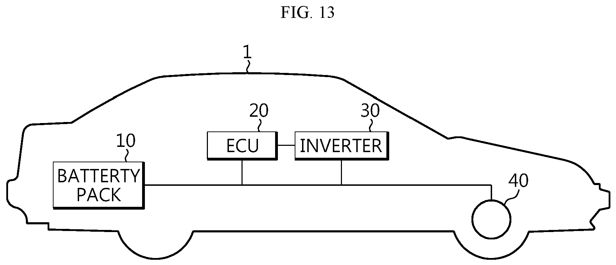

Next, a vehicle according to the present disclosure will be briefly described with reference to FIG. 13.

FIG. 13 is a schematic view showing a vehicle including the battery pack according to an embodiment of the present disclosure.

Referring to FIG. 13, a vehicle according to the present disclosure may be configured to include the above-described battery pack 10 according to an embodiment of the present disclosure, an ECU (Electronic Control Unit) 20, an inverter 30, and a motor 40. Preferably, the vehicle may be an electric vehicle.

The battery pack 10 may be used as an electric energy source to drive the vehicle by providing driving force to the motor 40. The battery pack 10 may be charged or discharged by the inverter 30 according to the driving of the motor 40 and/or internal combustion engine (not shown). The battery pack 10 may be charged by a regenerative charging device combined with a brake. The battery pack 10 may be electrically connected to the motor 40 of the vehicle through the inverter 30.

The ECU 20 is an electronic control device that controls the state of the vehicle. For example, it determines torque information on the basis of information such as accelerator, brake, speed, etc., and controls the output of the motor 40 to conform to the torque information. In addition, the ECU 20 transmits a control signal to the inverter 30 such that the battery pack 10 may be charged or discharged on the basis of state information such as SOC and SOH of the battery pack 10 received from the BMS. The inverter 30 charges or discharges the battery pack 10 on the basis of the control signal from the ECU 20. The motor 40 drives, based on control information (e.g., torque information) transmitted from the ECU 20, the vehicle using the electrical energy of the battery pack 10.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, although terms indicating directions such as upward, downward, left, right, forward, and backward directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

In addition, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery pack comprising:
a plurality of battery modules;
a pack case having an outer wall and a plurality of cross beams that partition an inner space surrounded by the outer wall, the pack case being configured such that the plurality of battery modules are respectively arranged in the partitioned spaces; and
a gas movement channel provided inside the cross beams and the outer wall,
wherein the battery pack is configured such that, when gas is generated in any one of the battery modules, the gas is discharged to the outside of the pack case through the gas movement channel of the outer wall and the cross beam adjacent to the battery module in which the gas is generated.

2. The battery pack according to claim 1,
wherein the gas movement channel includes:
a main channel extending along the outer wall; and
a plurality of branch channels branching from the main channel and extending along each of the cross beams.

3. The battery pack according to claim 2,
wherein the cross beam includes:
a gas suction port provided in at least one side surface and communicating the partitioned space with the branch channel; and
an opening/closing member configured to cover the gas suction port and operate to open the gas suction port when gas pressure is applied.

4. The battery pack according to claim 3,
wherein the cross beam includes a barrier provided therein and extending along the branch channel, and
wherein the branch channel includes a first branch channel and a second branch channel separated from each other by the barrier.

5. The battery pack according to claim 3,
wherein at least one gas suction port is provided in both side surfaces of the cross beam.

6. The battery pack according to claim 3,
wherein the gas suction port provided in one side surface of the cross beam and the gas suction port provided in the other side surface of the cross beam are arranged so as not to face each other.

7. The battery pack according to claim 3,
wherein the opening/closing member includes an opening/closing plate provided in the form of a plate with a larger area than the gas suction port and having only one end fixedly connected to an inside of the cross beam.

8. The battery pack according to claim 7,
wherein the opening/closing plate is made of a material having a property of bending by an external force, and
wherein the cross beam includes:
a barrier provided therein and extending along the branch channel; and
a plate stopper protrudingly formed on the barrier to limit bending of the opening/closing plate.

9. The battery pack according to claim 8,
wherein the plate stopper includes:
a first blocking plate extending in a direction intersecting the barrier; and
a second blocking plate intersecting the first blocking plate and extending in a direction toward the main channel.

10. The battery pack according to claim 3,
wherein the opening/closing member includes:
an opening/closing plate provided in the form of a plate capable of covering the gas suction port; and
a damper hinge connected to one end of the opening/closing plate and fixedly connected to an inside of the cross beam.

11. The battery pack according to claim 3,
wherein the opening/closing member includes:
an opening/closing plate provided in the form of a plate with a larger area than the gas suction port; and
an elastic member provided inside the cross beam and configured to elastically pressurize the opening/closing plate to cover the gas suction port.

12. The battery pack according to claim 11,
wherein the cross beam includes a barrier provided therein and extending along the branch channel, and
wherein the elastic member has one end coupled to the opening/closing plate and the other end coupled to the barrier.

13. The battery pack according to claim 1,
wherein the outer wall includes at least one gas discharge port through which gas is discharged from the gas movement channel to the outside of the pack case.

14. The battery pack according to claim 1,
wherein the pack case includes a pack tray provided in the form of a box with an open top and having the partitioned spaces therein, and a pack cover configured to cover the open top of the pack tray and coupled to the pack tray.

15. A vehicle comprising the battery pack according to any one of claims 1 to 14.
